Europäisches Patentamt

European Patent Office

Office européen des brevets

(19)

(11) Publication number: 0 155 774

A1

(12) **EUROPEAN PATENT APPLICATION**

(21) Application number: 85301235.9

(22) Date of filing: 25.02.85

(51) Int. Cl.⁴: **B 65 G 15/16**
**B 65 G 15/62**

(30) Priority: 06.03.84 GB 8405880
13.04.84 GB 8409649

(43) Date of publication of application:
25.09.85 Bulletin 85/39

(84) Designated Contracting States:
AT BE CH DE FR GB IT LI LU NL SE

(71) Applicant: Gough & Company (Hanley) Limited
Clough Street, Hanley
Stoke on Trent, Staffordshire(GB)

(72) Inventor: Gough, George Terah
1 Dale Close Baldwins Gate
Newcastle Staffordshire ST5 5DN(GB)

(72) Inventor: Whitehurst, Eric
69 Pikemere Road
Alsager Cheshire(GB)

(74) Representative: Carpmael, John William Maurice et al,
CARPMAELS & RANSFORD 43 Bloomsbury Square
London, WC1A 2RA(GB)

(54) Elevating conveyor.

(57) An elevating conveyor and the belt therefor, comprising an endless belt (117) entrained around at least a pair of vertically spaced pulleys and incorporating loading and discharge stations, the elevating section of the conveyor co-operating with a further conveyor part comprising a second belt (115) or a fixed plate, and the belt and co-operating part being biassed together to prevent leakage of product, wherein means is provided at the interfaces between the belt and co-operating part to reduce wear due to friction at the interfaces. The belt is formed of a central load-carrying portion (100) bounded by two lateral side wall portions (103, 105) which together define a flexible trough for material to be transported, and the upper surface of the side wall portions is provided with or formed of means to reduce wear due to friction with the further conveyor part. The means may comprise a plurality of grooves (119) in the top surface of the belt side wall portions and/or friction reducing material, e.g. Teflon strips, (121) on the other conveyor part.

FIG. 1.

0155774

## "ELEVATING CONVEYOR"

This invention relates to an elevating conveyor for granular, powdered or like material. The conveyor would, for example, be suitable for handling granular materials such as sugar or grain, or a powdered material such as cement or flour, or a material such as sand or a sand/gravel mixture, or coal which could be at least partially crushed. Furthermore, the conveyor could have many uses in the food industry.

It is well known to convey materials such as those described above from a first location to a second location which may be vertically spaced or indeed substantially vertically above the first location by confining the material between two endless belt runs which are moving in the same direction and at the same speed, or between one run of an endless belt and a fixed plate or casing. The belt or belts may have many different constructions and can either be supported so as to have a generally dished configuration when viewed in cross-section (see U.K.Patent No.1513992 or U.K. Patent No.944102) or alternatively, at least one of the belts may be provided with upstanding side walls so as to confine material supported by the belt and at least substantially prevent spillage of the material over the side edges of the belt (see U.K.Patent No.969429 and German DAS 1120978). The belt itself may be formed of a resiliently deformable rubber or plastics material and the surface of the belt on which the material to be conveyed is supported may be plain and smooth such as, for example, as disclosed in the German DAS 1120978 or it may be provided with transverse ribs such as are disclosed in the said U.K.Patent Nos. 969429 and 944102. These transverse ribs may take different forms but instead of providing ribs, the belt may have a working face which is provided with a pattern of spaced and staggered projecting nubs such as are disclosed in U.S.Patent No.3561907. In German Specification OLS 2717100, two co-operating belts are disclosed, the lower one of which is supported on suitable guide rollers so as to give it a generally dish-shaped cross-section and the upper one of which has longitudinally · extending side wall portions extending from the belt surface and transverse bars projecting from the belt surface. This belt is capable of conveying materials vertically.

A somewhat similar conveyor is disclosed in German OLS 2631643 and a yet further construction which relies upon a reduced pressure between the belts to hold the belts together is disclosed in German OLS 2418156.

Rubber and PVC belting is now well known and is commercially available with different cross-sectional shapes. It is now quite common to provide lateral spilledges on PVC belting and these spilledges can merely be upstanding flanges which can have a rectangular, square, round, generally V-shaped or any other required profile. Furthermore, these edges may have a generally corrugated construction when viewed in plan so that the belts can withstand flexing over conveyor pulleys or drums of small diamter. What is more, if desired, projecting ribs can also or alternatively be provided on a lower side of the belt and typically these may have a V-shaped profile to assist with the tracking, i.e. guidance of the belt.

We have now devised an elevating conveyor which incorporates at least one endless belt of a special cross-section which can be used to transfer material from one location to another, which locations may be vertically spaced, at high speed and which is suitable for even the most abrasive of materials and has very few moving parts except for the support rollers, pressure rollers and change direction drums or pulleys for the or each belt.

One of the problems with most, if not all, of the conveyors disclosed above, and similar conveyors of the twin belt type, is that they can only be operated at relatively low speeds. This is because they tend not to track satisfactorily because both belts tend to be entrained in superimposed relationship around the same pulleys or support drums. This means that, because the two belts will thus be moving through different radii of curvature, they in fact move at different speeds over the pulleys; in the case of movement over a pulley in one direction, belt A may be moving faster than belt B, but in the case of movement over a pulley in the opposite direction, i.e. change direction, belt B may be moving faster than belt A. However, the belts should always be in contact with each other to prevent material spillage, and this means therefore that there must be continuous relative belt movement. This can cause rapid belt wear due to friction, and means that such conveyors cannot be operated at high speed.

The present invention seeks to provide an elevating conveyor which overcomes the problems mentioned above, and extends also to a belt for use in such elevating conveyors.

According to one aspect of the present invention, we provide a belt for an elevating conveyor, the belt having a central load carrying portion and two lateral side wall portions defining with the load carrying portion a flexible trough for material to be conveyed, the side wall portions having an upper surface for co-operation with a further conveyor part to form a closed space for said material, at least over that section of the conveyor which is inclined to the horizontal, the upper surface being provided with means or formed of a material to reduce wear due to friction with said further conveyor part.

According to another aspect of the present invention, we provide an elevating conveyor comprising at least one endless belt entrained around at least two spaced support drums or pulleys, the conveyor including a loading station where the belt has a generally horizontal section and, spaced vertically therefrom, a discharge station, the belt when viewed in cross-section having a load-carrying portion and two co-planar spaced lateral side wall portions defining with the load carrying portion a trough for material to be conveyed, the open face of the load-carrying portion between the two lateral sections being closed off by a further part of the conveyor, at least over that section of the conveyor which is inclined to the horizontal, said further part of the conveyor being in bearing engagement with an upper surface of each side wall portion, means being provided at the interfaces between said upper surfaces and the further conveyor part to reduce wear due to friction at said interfaces.

Preferably, the belt is made of three strips of material, a load-carrying portion which extends the full width of the belt, and the two side wall portions which are bonded to side edge regions of the load-carrying portion, all three strips being flexible material.

Preferably, each support drum or pulley for the belt has upstanding side flanges between which the belt is located.

In one construction, the further part of the conveyor comprises a commercially available endless conveyor belt provided on its surface facing the material supporting belt with upstanding lateral guide strips, and if desired, a tracking strip located centrally on its other surface.

In a second construction, the further part of the conveyor comprises a second belt identical with the first mentioned belt in face to face engagement therewith.

In one construction, the side wall portions are formed of a softer material, e.g. a polymeric material, than the load carrying portion, e.g. 65 or 40 durometer rubber or the like.

The side wall portions may be bonded or otherwise secured to upper lateral surface regions of a belting strip providing the load carrying portion.

In one construction, the side wall portions may have a generally rectangular cross-section, and could be from about 1⅛ inches (28mm) to 1½ inches (38mm) deep, and about 2 inches (52mm) wide, with a recess formed in an upper lateral edge region to receive guide means on a co-operating conveyor belt.

The means to reduce wear on the side wall portions may comprise a plurality of longitudinal grooves on an otherwise generally flat top surface of the side wall portions, which gives such side wall portions, when viewed in cross-section, a castellated appearance. These grooves provide cooling air channels between portions of the top surface which co-operate with the further conveyor part.

Alternatively, or additionally, the top surface of the side wall portions may be coated with a friction reducing material or formed of a low friction material. It is preferred however that friction reducing material, e.g. a strip or layer of TEFLON or the like be provided on the other conveyor part where it co-operates with the side wall portions of the belt.

In a third construction, the further conveyor part comprises a flat plate provided with lateral slider bars thereon against which faces of the side wall belt portions bear. The plate may be part of a casing or tube, and in one arrangement the casing or tube is inclined at such an angle that material supported on the load-carrying portion of the endless belt has a major portion of its weight supported by the plate rather than the belt, thus reducing the potential problem of material escaping from between the belt and plate. Preferably, therefore, the belt is moved from a generally horizontal oritentation at the loading station through an angle greater than 90° so as effectively to reverse the belt and while the belt is in this reversed orientation, material is lifted vertically between the moving belt and the plate, there being biassing means such as spring-loaded rollers pressing the side wall portions of the belt into engagement with the lateral slider bars on the plate.

At the tope of the flat plate, the belt is preferably entrained around a guide pulley or drum, and material thereon may either be discharged over a curved upper portion of the plate, or it may be carried on a generally horizontal belt portion in a different direction for subsequent discharge.

Preferably, wherever a belt is entrained to change direction through 90° or thereabouts, it is preferred to entrain thebelt about two pulleys or drums which will successively change the belt direction in two steps of 45° or thereabouts. This will reduce friction and any heat build-up, and will reduce loads and pressurs between superimposed belts at such locations.

In a modified construction, the material carrying belt has a central load-bearing portion formed in two parts, the two parts abutting against each other with an overlap strip connected to one of the parts and overlying a central edge region of the other part. Horizontal runs of this modified belt are normally supported on spaced rollers and when it is desired to discharge material carried by this two-part belt, the supporting rollers at the discharge station for the two parts of thebelt will be lowered, thus allowing the two belt parts to move apart under the action of the material on the belt.

Preferably, in the region of the rollers which can be lowered, wheels which may have edges which are bevelled are provided above the side wall portions of the belts to bear down on the side wall portions so as to swing the belt parts downwardly and outwardly to allow discharge of product thereon. This construction allows selective material discharge in any horizontal run of the conveyor and of course such horizontal runs can be vertically spaced from each other if desired.

Several embodiments of elevating conveyor in accordance with the present invention are now described by way of example with reference to the accompanying drawings, in which:-

FIGURE 1 is a cross-section through a material carrying endless belt used in all the embodiments of the invention, but also showing the belt in use with a second known type of belt, in accordance with a first embodiment of the invention;

FIGURE 2 is a partly schematic side elevation of an embodiment of elevating conveyor incorporating the belts shown in Figure 1;

FIGURE 3 is a view similar to Figure 2 of a further embodiment of conveyor incorporating a material carrying belt as shown in Figure 1 and a fixed casing for the elevating section of the conveyor, and

FIGURE 4 is a view similar to Figure 3 but of a modified embodiment.

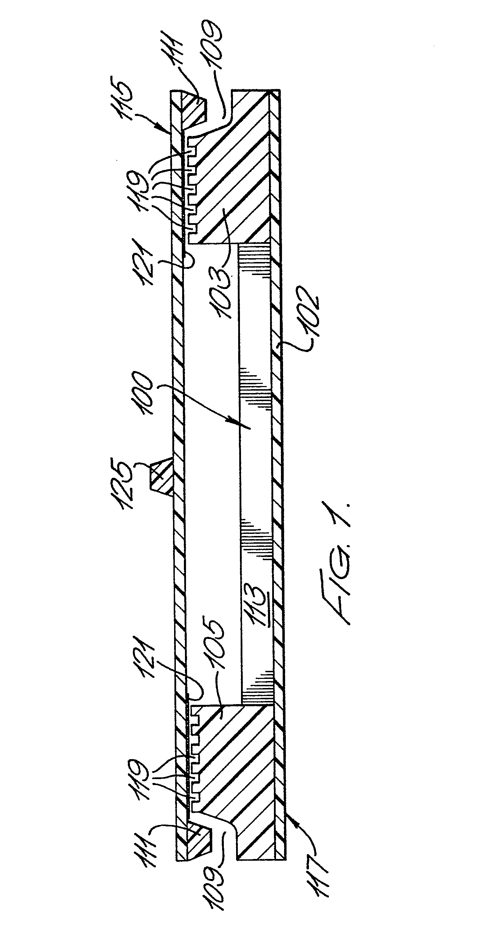

Referring to Figure 1, an endless material carrying conveyor belt 117 such as is used in all the embodiments of the invention is comprised of a load-carrying portion 100 and two spaced side wall portions 103 and 105. The portion 100 is provided by a belting strip 102 which extends the full width of the belt and the portions 103, 105 are bonded to lateral top surface regions of the strip 102 in known manner; other means of connection could however be provided. The belt may be made of any known rubbery or plastics materials, which may be reinforced, such as PVC, so
that the walls 103, 105 may be heat sealed, adhered,
galvanised, welded or secured in other known manner
to the belting 102.    The load-carrying portion 100
of the belt may have a generally smooth planar upper
or load-carrying surface or, alternatively, transverse
ribs 113 may be secured thereto at spaced locations.
These ribs may take any known form and for some materials
it is envisaged that the ribs could be replaced by
a plurality of upstanding nubs.

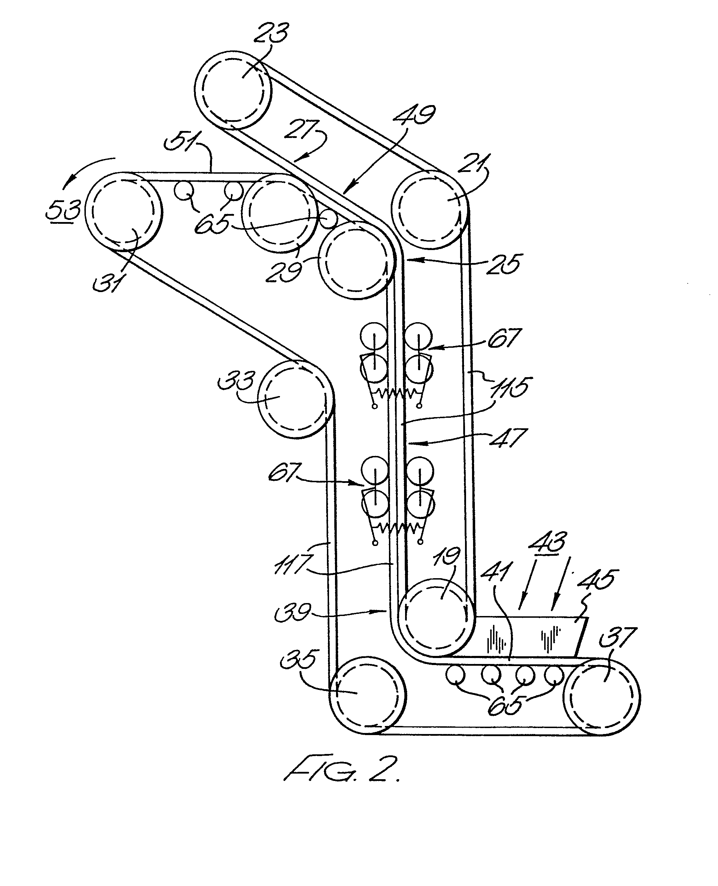

Typically, the load-carrying portion 100
may be about 6 inches wide and the walls 103, 105 about
2 inches wide and from about 1 inch to 1½ inches deep.
It is however, possible to have much wider belts than
this in which case they may have to be supported on
their underside over horizontal runs by suitable support
rollers or slide plates.    In order to prevent such
belts from "bellying" inwards, the belt would preferably
be provided with spaced upstands between the side walls.
As can be seen from Figure 1, the side walls 103, 105
are both formed of generally rectangular strips of
material and these strips together with the belting
102 define a trough of generally rectangular cross-
section for material to be conveyed.    At an upper
lateral edge region of each wall 103, 105 a recess
109 is provided to receive a guide strip 111 of a co-
operating endless conveyor belt 115.    This belt is
of largely standard construction and is preferably
provided on its rear face with a tracking strip 125
of the same general cross-section as the guide strips
111.    The belts 117 and 115 are entrained around guide
pulleys or drums as described hereinafter with reference
to Figure 2.

Because the belts 117 and 115, as they
are entrained around their various guide drums, move
relative to each other, it is necessary to provide
means where the two belts are superimposed to reduce belt wear and build-up of heat as a result of friction occurring due to the relative movement. For this purpose the otherwise flat top edge of each belt side wall 103, 105 has a plurality of generally parallel longitudinal grooves 119 formed therein giving the side walls, when viewed in cross-section, a castellated appearance. Alternatively, or additionally, the top face of the side walls 103, 105 may be formed of or coated with a low friction material but preferably a strip 121 of such material, e.g. TEFLON, is provided on the face of the belt 115 in each region where it co-operates with the side walls 103, 105. This strip is secured to the belt 115 in known manner.

Although it is not essential, it is preferred that the side walls 103 and 105 are formed of a softer material than the belting strip 102 and in the illustrated construction they are formed of a 65 durometer rubber material although if a deeper load-carrying area 100 is required, e.g. one of a depth of about 1½ inches, a 40 durometer material may be used for the side walls 103 and 105.

Referring now to Figure 2, the elevating conveyor shown therein incorporates two endless belts 115 and 117 each of which is constructed as shown in Figure 1. The belt 115 is entrained around three support drums or pulleys 19, 21 and 23, and at 25 and 27 is supported by the belt 117 in the manner shown in Figure 1 where that belt is entrained around spaced flanged pulleys or drums 29. The belt 117 is also entrained around further such drums 31, 33, 35 and 37 and is also supported at 39 on the belt 15 as this passes around the drum 19.

The drums 35 and 37 are preferably arranged at the same level and likewise the drum 19 is arranged relative to the drum 37 so that an upper run 41 of the belt 117 extends generally horizontally so as to form part of a loading station 43 provided with a feed chute 45. The feed chute 45 is specially shaped for sealing engagement with the run 41 of the belt 117 and so as to form a seal with the curved portion of the drum 19 and the section of the belt 115 on the drum adjacent the chute.

The drums 19 and 29 are so arranged that the two belts 115 and 117 have a generally vertical elevating run 47 followed by an inclined run 49 and the drum 31 is so located that after the run 49, the belt 117 has a horizontal run 51 so that material on the belt 117 can then be discharged over the drum 31 at a discharge station 53. (Inclined run 49 is optional, depending on the nature of the material being conveyed).

As can be appreciated from Figure 1, the drums 29, 31, 33, 35 and 37 have a special cross-section to receive the belt 117 and each comprises a pulley section having a width sufficient to support the total width of the belting strip 102 and externally of this, two spaced upstanding flanges which hold the belt 117 on the pulley sections. The drums 19, 21 and 23 have a suitable construction to receive the belt 115 and hold it in position, there being a suitable groove in the surface of these drums to receive the tracking strip 125.

Between the various drums 31, 29 and 37, 19 suitable flat support rollers 65 are provided to support the load-carrying portion 100 of the belt 117.

In the vertical run 47 of the two belts 115 and 117 it is important that the two belts are pressed into engagement with each other so as to prevent spillage of material being conveyed between them over the edges of the side walls 103, 105. Accordingly, a plurality of sets of pressure rolls 67 are located in the vertical run 47 on either side of the belts 115 and 117 with the rolls on one side of the belts being biassed towards the rolls on the other side of the belts as illustrated.

In an alternative embodiment (not illustrated) the belt 115 may be replaced by a flat belt or a belt of alternative construction. This means the area for material to be conveyed between the load-carrying portion 100 of the belt 117 and the other belt 115 may be different from that illustrated in Figure 2.

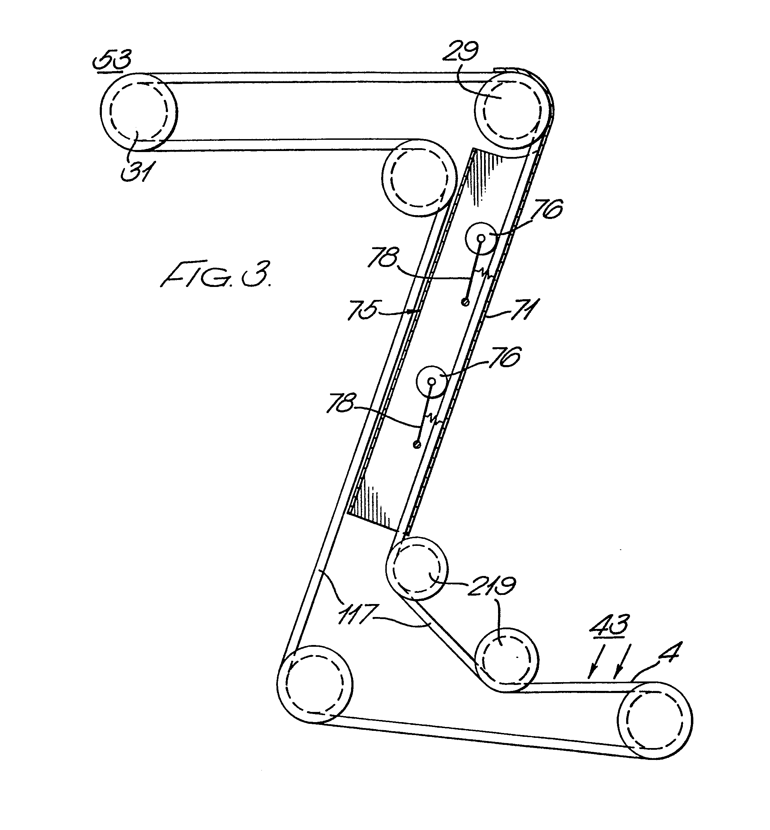

In the construction shown in Figure 3, a single belt 117 identical to that shown in Figure 1 is used on its own but the elevating sections 47 and 49 of the conveyor are replaced by an elevating section wherein the part of the conveyor which co-operates with the belt 117 is a fixed plate 71 which may be provided with slider bars against which the upper faces of the belt side walls 103 and 105 run. In the illustrated construction, the fixed plate 71 forms one wall of a generally rectangular casing or tube 75 through which the belt 117 runs so as totally to encompass the elevating section of the conveyor. The plate 71 or indeed the whole of the casing 75 and the belt 117 are biassed into engagement with one another so as to prevent spillage of material being conveyed in the elevating section over the side edges of the belt sections 103 and 105, by means of rollers 76 mounted on spring-loaded arms 78 which cause the side walls 103 and 105 of the belt to be pressed against the slider bars on the plate 71. As can be seen from Figure 3, the plate 71 is inclined at an angle of about 70° with the horizontal run 4 of the belt 117 at the loading station 43 (this may incorporate a further endless conveyor belt) so that as the belt 117 passes round a pair of spaced pulleys 219, it is "reversed" or turned over and the effect of this is that in the elevating section of the belt between the pulleys 219 and 29, material which was previously supported on the load carrying portion of the belt is now supported on the plate 71. This means that very little, if any, of the load of the material in the elevating section of the conveyor is carried by the flexible belt thereby reducing the potential problem of material leakage between the plate 71 and the side walls 103 and 105 of the belt in the elevating section. This means that a very satisfactory seal can be achieved as a result of the rollers 76 bearing on the reverse face of the belt. It will be noted that in this construction, two pulleys 219 are provided where the pulley 19 was provided in the Figure 2 construction. This arrangement could also be provided in the Figure 2 construction, and it has the advantage that instead of moving the belt through 90° or thereabouts in a single step, it is first moved through 45° or thereabouts by one of the pulleys and is then moved 45° or thereabouts by the other pulley 219. This will reduce friction and any heat build-up that may occur.

In the case of the construction shown in Figure 2, this of course means that where two co-operating belts pass over the pulleys 219, there is a reduction in load or pressure between the belts as they pass round the pulleys in comparison with the situation where they pass round a single pulley 19.

In the construction shown in Figure 3, the plate 71 will have to be curved at its upper end so as to follow the general contour of the pulley 29 so as to guide material on the belt 117 up and around the pulley 29 onto the horizontal run between the pulley 29 and the pulley 31 so that it can be discharged at 53.

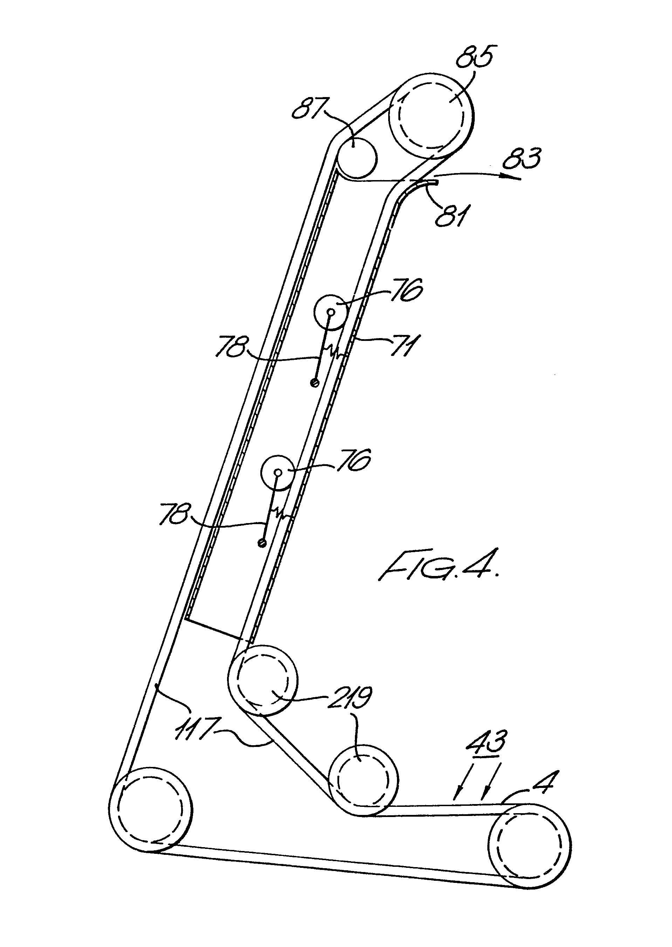

A modification of the Figure 3 construction is shown in Figure 4 and in this case the plate 71 is curved around at 81 so that discharge can occur at 83. This means that the belt 117 must extend above curve 81 and for this purpose it is entrained around spaced pairs of pulleys 85 and 87.

In the above-described constructions the belt 117 has a load-carrying portion 100 which is formed in one part. However, this could be modified so as to form the portion 100 in two parts as is disclosed in our co-pending British Applcation No.8405880 and in particular in Figures 5-8 thereof. The disclosures of that specification insofar as they are applicable to the constructions described herein are embodied herein by way of cross-reference.

Although it is preferred that the load-carrying portion 100 of the belt 117, or its two-part version, has upstanding transverse spaced ribs thereon, or a plurality of upstanding nubs, this is not essential. All powdered, granular or like materials when stockpiled have their own angle of repose and it is believed that the present invention will operate satisfactorily and convey vertically without the provision of transverse ribs 113 or upstanding nubs because at the loading station 43 the material being conveyed and which is supported on the horizontal run 41 of the belt 117 will find its own angle of repose; the resultant frictional forces generated within the material in this horizontal run 41 will be sufficient to support a column of the same material in the vertical run 47 of the conveyor. Such properties are well known and are clearly relied upon for a satisfactory operation of many of the already known conveyors the subject of the prior specifications listed herein.

It will of course be appreciated that drive to the various conveyor belts, belt tensioning, precise details of the pressure rolls 67 and the manner in which the various component parts of the conveyors are supported in their framework form no part of the present invention and accordingly these parts of the conveyors have not been described in detail.

The provision of recesses 109 in the side walls 103 and 105 which co-operate with the guide strips 111 ensure satisfactory sealing and overlap of the two belts 115 and 117 and give good tracking between the two belts. Furthermore, the provision of the grooves 119 in the side walls 103 and 105 means that there can be an airflow in the grooves which has a cooling effect when friction occurs when the belts move relative to each other as they pass over their guide pulleys or drums. Furthermore, because the side walls 103 and 105 are formed of a soft rubbery material, a satisfactory seal between the belts 115 and 117 is provided. In any event of course, the anti-friction material between the two belts allows relative movement between the belts without undue friction occurring. By providing the side walls 103 and 105 of a soft material the belt 117 can negotiate small radii and what is more the depth of the load-carrying area 100 can be quite significant.

Furthermore, because this relative slipping movement is permitted and there is no effective friction and hence wear, the whole elevating conveyor can be operated at high speed, e.g. at speeds of 300ft. or more a minute.

It will of course be understood that the present invention has been described above purely by way of example, and modifications of detail can be made within the scope and spirit of the invention. For example, the belt 117 could be modified so as to be capable of conveying two (or more) different materials at a time by providing it with an "internal" side wall portion (or more than one) between the portions 103, 105. The or each internal portion could be located anywhere between portions 103,105 depending upon the relative amounts of different materials to be conveyed (elevated), and would be similar in construction to portions 103,105 and provided with means or formed of a material to reduce wear due to frictional engagement with the other belt or conveyor part.

Furthermore, instead of providing two strips 121 of friction reducing material on the belt 115 or on the plate 71 to provide the slider bars, a single full width strip may be provided, if the belt 115 has an "internal" wall portion to divide it into two load
carrying portions, three strips 121 could be provided.

CLAIMS:-

1. A belt (117) for an elevating conveyor, the belt (117) having a central load carrying portion (100) and two lateral side wall portions (103,105) defining with the load carrying portion (100) a flexible trough for material to be conveyed, the side wall portions (103, 105) having an upper surface for cooperation with a further conveyor part (115 or 71) to form a closed space for said material, at least over that section (47) of the conveyor which is inclined to the horizontal, characterised in that the upper surface is provided with means (119) or formed of a material to reduce wear due to friction with said further conveyor part (115 or 71).

2. An elevating conveyor comprising at least one endless belt (117) entrained around at least two spaced support pulleys (29,31,33,35,37), the conveyor including a loading station (45) where the belt (117) has a generally horizontal section and, spaced vertically therefrom, a discharge station (53), the belt (117) when viewed in cross-section having a load-carrying portion (100) and two co-planar spaced lateral side wall portions (103,105) defining with the load carrying portion (100) a trough for material to be conveyed, the open face of the load-carrying portion (100) between the two lateral sections (103,105) being closed off by a further part (115 or 71) of the conveyor, at least over that section (47) of the conveyor which is inclined to the horizontal, said further part (47) of the conveyor being in bearing engagement with an upper surface of each side wall portion (103,105), characterised in that means (119 and/or 121) is provided at the interfaces between said upper surfaces and the further conveyor part (115 or 71) to reduce wear due to friction at said interfaces.

3. The invention as claimed in claim 1 or 2 wherein the side wall portions (103,105) have a generally rectangular cross-section with a recess (109) formed in an upper lateral edge region to receive guide means (111).

4. The invention as claimed in any one of the preceding claims wherein the means to reduce wear on the side wall portions comprise a plurality of longitudinal grooves (119) on the otherwise generally flat top surface of the side wall portions (103,105) which gives such side wall portions, when viewed in cross section, a castellated appearance.

5. The invention as claimed in any one of the preceding claims wherein the top surface of the side wall portion (103,105) is coated with a friction reducing material or formed of a low friction material.

6. The invention as claimed in any one of the preceding claims wherein friction reducing material (121) is provided on the other conveyor part (115 or 71) where it cooperates with the side wall portions (103,105) of the belt (117).

7. The invention as claimed in any one of claims 1-6 wherein the further conveyor part comprises a flat plate (71) provided with lateral slider bars (121) thereon against which faces of the side wall belt portions (103,105) bear, the plate (71) being part of a casing or tube (75).

8. The invention as claimed in claim 7 wherein the casing or tube (75) is inclined at such an angle that material supported on the load-carrying portion (100) of the endless belt (117) has a major portion of its weight supported by the plate (71) rather than the belt (117), thus reducing the potential problem of material escaping from between the belt (117) and plate (71).

9. The invention as claimed in claim 8 wherein the belt (117) is moved from a generally horizontal orientation at the loading station (45) through an angle greater than 90° so as effectively to reverse the belt (117) and wherein, in use, while the belt (117) is in this reversed orientation, material is lifted vertically between the moving belt (117) and the plate (71), there being biassing means (76,78) pressing the side wall portions (103,105) of the belt (117) into engagement with the lateral slider bars (121) on the plate (71).

10. The invention as claimed in any one of claims 7 to 9 wherein at the top of the flat plate (71), the belt (117) is entrained around a guide pulley or drum (29 or 85) and wherein material on the belt is discharged over a curved upper portion (83) of the plate or is carried on a generally horozintal belt portion (Fig. 3) in a different direction for subsequent discharge.

11. The invention as claimed in any one of the preceding claims 2 to 10 wherein, between the loading station (45) and an elevating section of the conveyor the belt (117) is entrained about two pulleys or drums (219) which will successively change the belt direction in two steps of about 45°.

FIG. 1.

FIG. 2.

FIG. 3.

FIG.4.

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| A | DE-A-2 041 440 (ENVIROTECH CORP.) * Page 6, line 3 - page 11, line 11; figures 1-7 * | 1,2,7 | B 65 G 15/16 B 65 G 15/62 |
| A | CH-A- 152 436 (KRIEGER) * Page 1, left hand column; figure 1 * | 1 | |
| A | DE-A-3 147 091 (GEPPERT) * Page 37, lines 18-30 * | 8 | |
| D,A | DE-A-2 717 100 (GUTEHOFFNUNGSHÜTTE STERKRADE AG) | | |
| A | DE-A-2 614 109 (ALLIS-CHALMERS CANADA LTD.) | | TECHNICAL FIELDS SEARCHED (Int. Cl.4) |
| D,A | DE-A-2 418 156 (SCHILLINGS) | | B 65 G 15/00 |
| D,A | DE-C-1 120 978 (OLESCH) | | |
| A | GB-A-1 298 589 (THE GOODYEAR TIRE & RUBBER CO.) | | |
| | -/- | | |

The present search report has been drawn up for all claims

| Place of search | Date of completion of the search | Examiner |
|---|---|---|
| BERLIN | 30-05-1985 | SIMON J J P |

## EUROPEAN SEARCH REPORT

**European Patent Office**

## DOCUMENTS CONSIDERED TO BE RELEVANT

| Category | Citation of document with indication where appropriate, of relevant passages | Relevant to claim | CLASSIFICATION OF THE APPLICATION (Int Cl 4) |
|---|---|---|---|
| D,A | GB-A- 969 429 (PREPARATION INDUSTRIELLE DES COMBUSTIBLES) | | |
| A | US-A-3 910 405 (COUPERUS et al.) | | |
| D,A | US-A-3 561 907 (CAMPBELL) | | |
| | | | **TECHNICAL FIELDS SEARCHED (Int. Cl 4)** |

The present search report has been drawn up for all claims

| Place of search | Date of completion of the search | Examiner |
|---|---|---|
| BERLIN | 30-05-1985 | SIMON J J P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82